# EUROPEAN PATENT APPLICATION

(11) **EP 4 325 409 A1**
(43) Date of publication of application: **21.02.2024**
(21) Application number: 22871560.3
(22) Date of filing: 11.07.2022
(51) Int. Cl.: G06Q 20/10

(54) **OFFLINE PAYMENT AUTHORIZATION METHOD AND APPARATUS, OFFLINE PAYMENT METHOD AND APPARATUS, AND COLLECTION METHOD AND APPARATUS**

(30) Priority: 27.09.2021 CN 202111147591
(71) Applicant: Alipay (Hangzhou) Information Technology Co., Ltd., Hangzhou, Zhejiang 310000 (CN)
(72) Inventor: XU, Deng Wei, Hangzhou, Zhejiang 310000 (CN); ZHU, Bing Ying, Hangzhou, Zhejiang 310000 (CN); XIN, Zhi, Hangzhou, Zhejiang 310000 (CN); WAN, Xiao Fei, Hangzhou, Zhejiang 310000 (CN); ZHOU, Lei, Hangzhou, Zhejiang 310000 (CN)
(74) Representative: Fish & Richardson P.C.
(86) International application number: PCT/CN2022/104976
(87) International publication number: WO 2023/045501

(57) **Abstract**

Embodiments of this application provide methods and apparatuses for offline payment authorization, offline payment, and payment collection for an offline device. The offline payment authorization method is applied to a server, and includes the following: obtaining wallet account information, a current account balance, and current credit information of a target electronic wallet account when it is detected that a current state of the target electronic wallet account satisfies a predetermined certificate delivery condition; determining a corresponding offline payment limit based on the current account balance and the current credit information; signing summary information by using a server private key to obtain an electronic wallet signature, where the summary information includes the wallet account information, the offline payment limit, an issuance time, and validity duration; generating a user certificate based on the summary information and the electronic wallet signature; and delivering the user certificate to a terminal device that has the target electronic wallet account so that an offline account corresponding to the target electronic wallet account can make offline payment within the offline payment limit based on the user certificate.

## Description

This application claims priority to Chinese Patent Application No. 202111147591.1, filed with the China National Intellectual Property Administration on September 27, 2021 and entitled "METHODS AND APPARATUSES FOR OFFLINE PAYMENT AUTHORIZATION, OFFLINE PAYMENT, AND PAYMENT COLLECTION", which is incorporated herein by reference in its entirety.

### TECHNICAL FIELD

This specification relates to the field of electronic payment technologies, and in particular, to methods and apparatuses for offline payment authorization, offline payment, and payment collection for an offline device.

### BACKGROUND

Offline wallet payment (offline payment) is a significant supplement to online payment when there is no internet connection. "No internet connection" usually occurs in a specific scenario, such as in an airplane, in a basement, or in a mountain area.

Currently, an offline wallet payment solution needs to activate the offline wallet (that is, opening an offline account) and "recharge" a certain amount of money to the offline wallet when the terminal device is connected to the internet. This allows the user to use the offline wallet payment service when the terminal device has no internet connection.

However, activating and recharging the offline wallet in advance imposes certain limitations to the actual application of offline wallet payment.

### SUMMARY

One or more embodiments of this specification provide methods and apparatuses for offline payment authorization, offline payment, and payment collection for an offline device so as to implement authorization of an offline payment function that does not need recharging in advance.

According to a first aspect, an offline payment authorization method is provided and is applied to a server. The method includes the following: obtaining wallet account information, a current account balance, and current credit information of a target electronic wallet account when it is detected that a current state of the target electronic wallet account satisfies a predetermined certificate delivery condition; determining a corresponding offline payment limit based on the current account balance and the current credit information; signing summary information by using a server private key to obtain an electronic wallet signature, where the summary information includes the wallet account information, the offline payment limit, an issuance time, and validity duration; generating a user certificate based on the summary information and the electronic wallet signature; and delivering the user certificate to a terminal device that has the target electronic wallet account so that an offline account corresponding to the target electronic wallet account can make offline payment within the offline payment limit based on the user certificate.

In an implementation, the predetermined certificate delivery condition includes at least one of the following conditions: an obtained user certificate of the target electronic wallet account expires, and the terminal device is connected to the internet; it is the first time period before the obtained user certificate expires, and the terminal device is connected to the internet; it is the second time period before the obtained user certificate expires, and a mobile data usage state of the terminal device satisfies a predetermined idle condition; a change of the current account balance and/or the current credit information of the target electronic wallet account satisfies a specific condition; and the target electronic wallet account has not obtained a user certificate, and the mobile data usage state of the terminal device satisfies a predetermined idle condition.

In an implementation, the wallet account information is a hash value of a wallet account ID and wallet account name information that are corresponding to the target electronic wallet account.

In an implementation, the current credit information includes at least one piece of the following information: a current credit value and a current available credit limit.

In an implementation, the terminal device is provided with a trusted execution environment TEE.

The delivering the user certificate to a terminal device that has the target electronic wallet account includes the following: delivering the user certificate to the TEE of the terminal device so that the terminal device stores the user certificate in the TEE.

In an implementation, the determining a corresponding offline payment limit based on the current account balance and the current credit information includes: determining a current score of the target electronic wallet account based on the current account balance, the current credit information, and weights of the current account balance and the current credit information; and determining the offline payment limit corresponding to the target electronic wallet account based on the current score.

In an implementation, the determining the offline payment limit corresponding to the target electronic wallet account based on the current score includes the following: determining a current limit level corresponding to the current score based on a predetermined first mapping relationship between an account score and a limit level; and determining a limit value corresponding to the current limit level as the offline payment limit based on a predetermined second mapping relationship between a limit level and a limit value.

In an implementation, the method further includes the following: obtaining an offline bill sent by the terminal device, where the offline bill is a bill generated by the offline account after offline payment, and includes at least a corresponding transaction amount and the wallet account information; deducting a corresponding amount from the target electronic wallet account based on the transaction amount and the wallet account information; and sending limit recovery information to the terminal device so that a current upper limit for offline payment of the offline account is restored to the offline payment limit.

In an implementation, the offline bill further includes corresponding merchant account information and a merchant signature, and the merchant signature is obtained by signing the merchant account information and the transaction amount by using a merchant private key.

The deducting a corresponding amount from the target electronic wallet account based on the transaction amount and the wallet account information includes: verifying the offline bill by using a merchant public key corresponding to the merchant private key; and deducting the corresponding amount from the target electronic wallet account based on the transaction amount and the wallet account information if the verification succeeds.

According to a second aspect, an offline payment method is provided and is applied to a terminal device. The terminal device stores a user certificate delivered by a server, and the user certificate includes at least an offline payment limit, an issuance time, validity duration, and an electronic wallet signature. The method includes the following: when an offline payment instruction is received, determining whether a current transaction amount carried in the offline payment instruction is not greater than a current upper limit for offline payment, where the current upper limit for offline payment is determined based on the offline payment limit and a historical offline transaction amount; providing the user certificate to a payment collection device corresponding to the offline payment instruction if it is determined that the current transaction amount is not greater than the current upper limit for offline payment; obtaining transaction confirmation information provided by the payment collection device, where the transaction confirmation information is sent when the payment collection device determines, based on the electronic wallet signature, that the user certificate is valid; and generating an offline bill based on the transaction confirmation information.

In an implementation, the terminal device includes a trusted execution environment TEE, the user certificate is stored in the TEE, and the method is executed in the TEE.

In an implementation, the method further includes the following: determining whether the user certificate is valid based on a receiving time of the offline payment instruction and the issuance time and validity duration of the user certificate; and providing the user certificate to the payment collection device when it is determined that the user certificate is valid.

In an implementation, the method further includes the following: calculating a difference between the current upper limit for offline payment and the current transaction amount; and determining the difference as a new current upper limit for offline payment.

In an implementation, the method further includes the following: sending the offline bill to the server when the terminal device is connected to the internet so that the server performs settlement based on the offline bill.

In an implementation, the obtaining transaction confirmation information provided by the payment collection device includes the following: obtaining, in a short-range transmission method, the transaction confirmation information provided by the payment collection device.

In an implementation, the transaction confirmation information includes merchant account information of the merchant, the current transaction amount, and a merchant signature, and the merchant signature is obtained by signing the merchant account information and the current transaction amount by using a merchant private key.

The generating an offline bill based on the transaction confirmation information includes the following: verifying the transaction confirmation information based on a merchant public key corresponding to the merchant private key; and generating the offline bill based on the merchant account information, the current transaction amount, and the wallet account information if the verification succeeds.

According to a third aspect, a payment collection method for an offline device is provided, and is applied to a payment collection device. The method includes the following: obtaining a user certificate provided by an offline terminal device, where the user certificate is delivered by a server, and includes wallet account information of an electronic wallet account corresponding to the terminal device, an offline payment limit, an issuance time and validity duration of the user certificate, and an electronic wallet signature; verifying the electronic wallet signature by using a public key of the server; if the verification succeeds, determining whether the user certificate is valid based on a transaction time of the current transaction, the issuance time, and the validity duration; generating transaction confirmation information corresponding to the current transaction when it is determined that the user certificate is valid; and providing the transaction confirmation information to the terminal device so that the terminal device generates a corresponding offline bill based on the transaction confirmation information.

In an implementation, the transaction confirmation information includes at least merchant account information of the merchant, the current transaction amount, and a merchant signature, and the merchant signature is obtained by signing the merchant account information and the current transaction amount by using a merchant private key.

In an implementation, the providing the transaction confirmation information to the terminal device includes the following: providing the transaction confirmation information to the terminal device in a short-range transmission method.

In an implementation, the method further includes the following: generating transaction failure information when it is determined that the user certificate is invalid; and providing the transaction failure information to the terminal device.

According to a fourth aspect, an offline payment authorization apparatus is provided and is applied to a server. The apparatus includes the following: a first acquisition module, configured to obtain wallet account information, a current account balance, and current credit information of a target electronic wallet account when it is detected that a current state of the target electronic wallet account satisfies a predetermined certificate delivery condition; a first determining module, configured to determine a corresponding offline payment limit based on the current account balance and the current credit information; a first signing module, configured to sign summary information by using a server private key to obtain an electronic wallet signature, where the summary information includes the wallet account information, the offline payment limit, an issuance time, and validity duration; a first generation module, configured to generate a user certificate based on the summary information and the electronic wallet signature; and a first sending module, configured to deliver the user certificate to a terminal device that has the target electronic wallet account so that an offline account corresponding to the target electronic wallet account can make offline payment within the offline payment limit based on the user certificate.

According to a fifth aspect, an offline payment apparatus is provided and is applied to a terminal device. The terminal device stores a user certificate delivered by a server, and the user certificate includes at least an offline payment limit, an issuance time, validity duration, and an electronic wallet signature. The apparatus includes the following: a first judgment module, configured to: when an offline payment instruction is received, determine whether a current transaction amount carried in the offline payment instruction is not greater than a current upper limit for offline payment, where the current upper limit for offline payment is determined based on the offline payment limit and a historical offline transaction amount; a first provision module, configured to provide the user certificate to a payment collection device corresponding to the offline payment instruction if it is determined that the current transaction amount is not greater than the current upper limit for offline payment; a second acquisition module, configured to obtain transaction confirmation information provided by the payment collection device, where the transaction confirmation information is sent when the payment collection device determines, based on the electronic wallet signature, that the user certificate is valid; and a second generation module, configured to generate an offline bill based on the transaction confirmation information.

According to a sixth aspect, a payment collection apparatus for an offline device is provided, and is applied to a payment collection device. The apparatus includes the following: a third acquisition module, configured to obtain a user certificate provided by an offline terminal device, where the user certificate is delivered by a server, and includes wallet account information of an electronic wallet account corresponding to the terminal device, an offline payment limit, an issuance time and validity duration of the user certificate, and an electronic wallet signature; a first verification module, configured to verify the electronic wallet signature by using a public key of the server; a second judgment module, configured to: if the verification succeeds, determine whether the user certificate is valid based on a transaction time of the current transaction, the issuance time, and the validity duration; a third generation module, configured to generate transaction confirmation information corresponding to the current transaction when it is determined that the user certificate is valid; and a second provision module, configured to provide the transaction confirmation information to the terminal device so that the terminal device generates a corresponding offline bill based on the transaction confirmation information.

According to a seventh aspect, a computer-readable storage medium is provided. The computer-readable storage medium stores a computer program, and when the computer program is executed on a computer, the computer is enabled to perform the method according to the first aspect.

According to an eighth aspect, a computing device is provided, including a memory and a processor. The memory stores executable code, and when the processor executes the executable code, the method according to the first aspect is implemented.

According to a ninth aspect, a computer-readable storage medium is provided. The computer-readable storage medium stores a computer program, and when the computer program is executed on a computer, the computer is enabled to perform the method according to the second aspect.

According to a tenth aspect, a computing device is provided, including a memory and a processor. The memory stores executable code, and the processor executes the executable code to implement the method according to the second aspect.

According to an eleventh aspect, a computer-readable storage medium is provided. The computer-readable storage medium stores a computer program, and when the computer program is executed on a computer, the computer is enabled to perform the method according to the third aspect.

According to a twelfth aspect, a computing device is provided, including a memory and a processor. The memory stores executable code, and when the processor executes the executable code, the method according to the third aspect is implemented.

According to the methods and the apparatuses provided in the embodiments of this specification, when the current state of the target electronic wallet account satisfies the predetermined certificate delivery condition, the user certificate that is corresponding to the target electronic wallet account and that includes the offline payment limit is generated by using the wallet account information, the current account balance, and the current credit information of the target electronic wallet account, and is delivered to the terminal device that has the target electronic wallet account. As such, the offline account corresponding to the target electronic wallet account can make offline payment within the offline payment limit based on the user certificate, that is, offline payment authorization for the offline account is implemented by using the user certificate. As such, offline payment within the offline payment limit can be implemented without the need of recharging the offline account in advance, that is, without the need of loading working fund in advance. In addition, when the user certificate is delivered for the first time for the target electronic wallet account, there is no need to open the offline account corresponding to the target electronic wallet account (that is, no need to activate a corresponding hardware wallet), and there's no need to open and recharge the offline account in advance so that offline payment authorization is implemented.

### BRIEF DESCRIPTION OF DRAWINGS

To describe the technical solutions in embodiments of this application more clearly, the following briefly describes the accompanying drawings needed for describing the embodiments. Clearly, the accompanying drawings in the following description merely illustrate some embodiments of this application, and a person of ordinary skill in the art can derive other drawings from these accompanying drawings without creative efforts.
FIG. 1 is a schematic diagram illustrating an implementation framework, according to one or more embodiments disclosed in this specification;
FIG. 2 is a schematic flowchart illustrating an offline payment authorization method, according to one or more embodiments;
FIG. 3 is a schematic flowchart illustrating an offline payment method, according to one or more embodiments;
FIG. 4 is a schematic flowchart illustrating a payment collection method for an offline device, according to one or more embodiments;
FIG. 5 is a schematic block diagram illustrating an offline payment authorization apparatus, according to one or more embodiments;
FIG. 6 is a schematic block diagram illustrating an offline payment apparatus, according to one or more embodiments; and
FIG. 7 is a schematic block diagram illustrating a payment collection apparatus for an offline device, according to one or more embodiments.

### DESCRIPTION OF EMBODIMENTS

The following describes technical solutions in some embodiments of this specification in detail with reference to accompanying drawings.

Embodiments of this specification disclose offline payment authorization methods and apparatuses, offline payment methods and apparatuses, and payment collection methods and apparatuses for offline devices. The following first describes an application scenario and an inventive concept of an offline payment authorization method. Details are as follows:
Currently, an offline wallet payment solution needs activating the offline wallet (that is, opening an offline account) and "recharging" a certain amount of money to the offline wallet when the terminal device is connected to the internet. This allows the user to use an offline payment service provided by the offline wallet when the terminal device has no internet connection.

The user usually does not have the habit of activating and recharging the offline wallet in advance, or cannot determine in advance that the user needs the offline payment service. For example, a user needs to buy something when travelling on an airplane. In this case, a terminal device of the user has no internet connection (in an offline state). In order to use the offline wallet payment service, the user needs to "recharge" money to an activated offline wallet in advance when the terminal device is connected to the internet. However, users often do not anticipate the need to purchase items on the airplane in advance, and therefore they do not recharge the offline wallet in advance. Correspondingly, activating and recharging the offline wallet in advance imposes a limitation on use in the actual application to a certain extent.

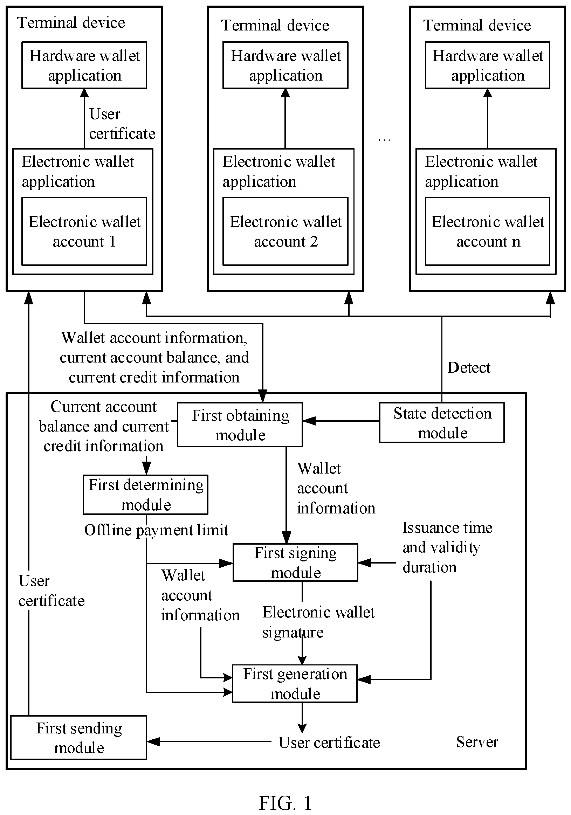

In view of this, one or more embodiments of this specification provide an offline payment authorization method. FIG. 1 is a schematic diagram illustrating an implementation framework of one or more embodiments disclosed in the specification. The server can detect current states of multiple electronic wallet accounts. As shown in FIG. 1, the multiple electronic wallet accounts can include an electronic wallet account 1, an electronic wallet account 2, ..., and an electronic wallet account n. The electronic wallet account is an account of an electronic wallet application, and the electronic wallet application runs on the terminal device. The electronic wallet application can include but is not limited to applications that can support an online payment function, such as the Alipay wallet application, a mobile phone wallet application, and a bank terminal application. To support the offline payment function, a hardware wallet application is further provided in the terminal device. The hardware wallet application can exist in a form of a plug-in of an electronic wallet application, or can exist in a form of independent client software. If the hardware wallet application exists in a form of independent client software, the electronic wallet application can be bound to the hardware wallet application so that the hardware wallet application can perform offline payment based on a user certificate. In an implementation, the hardware wallet application can be an offline wallet application based on a mobile phone, an offline wallet application based on mobile phone SIM cards of operators such as China Mobile and China Unicom, or an offline wallet application based on hardware of a payment card of various card merchants.

The server can detect the state of the electronic wallet account by using a state detection module. As shown in FIG. 1, when detecting that a current state of the electronic wallet account 1 satisfies a predetermined certificate delivery condition, the server uses the electronic wallet account 1 as a target electronic wallet account, and obtains wallet account information, a current account balance, and current credit information of the target electronic wallet account by using a first acquisition module of the server; determines an offline payment limit corresponding to the target electronic wallet account based on the current account balance and the current credit information by using a first determining module of the server; signs summary information based on a server private key by using a first signing module of the server, to obtain an electronic wallet signature, where the summary information includes the wallet account information, the offline payment limit, an issuance time, and validity duration; generates a user certificate corresponding to the target electronic wallet account based on the summary information and the electronic wallet signature by using a first generation module of the server; and delivers the user certificate to a terminal device that has the target electronic wallet account by using a first sending module of the server. As such, an offline account corresponding to the target electronic wallet account can make offline payment within the offline payment limit based on the user certificate. The offline account is an account used to log in to the hardware wallet application, and can make offline payment by using the hardware wallet application.

In an implementation, the predetermined certificate delivery condition includes at least one of the following conditions: 1. An obtained user certificate of the target electronic wallet account expires, and the terminal device is connected to the internet. 2. It is the first time period before the obtained user certificate expires, and the terminal device is connected to the internet. 3. It is the second time period before the obtained user certificate expires, and a mobile data usage state of the terminal device satisfies a predetermined idle condition. 4. A change of the current account balance and/or the current credit information of the target electronic wallet account satisfies a specific condition. 5. The target electronic wallet account has not obtained a user certificate, and the mobile data usage state of the terminal device satisfies a predetermined idle condition. The second time period is greater than the first time period.

In this embodiment, the server can estimate the offline payment limit corresponding to the target electronic wallet account based on the current account balance and the current credit information of the target electronic wallet account so as to generate the user certificate with a validity period, and deliver the user certificate to the terminal device that has the target electronic wallet account. As such, the offline account corresponding to the target electronic wallet account can make offline payment within the offline payment limit based on the user certificate. In other words, offline payment authorization is implemented for the offline account by using the user certificate so that the offline account can implement offline payment within the offline payment limit without the need of recharging in advance or loading of working fund in advance. In addition, when the user certificate is delivered for the first time for the target electronic wallet account, there is no need to open the offline account corresponding to the target electronic wallet account (that is, no need to activate a corresponding hardware wallet), and there's no need to open and recharge the offline account in advance so that offline payment authorization is implemented.

With reference to specific embodiments, the following describes in detail the offline payment authorization method, the offline payment method, and the payment collection method for an offline device that are provided in the specification. First, the offline payment authorization method is described.

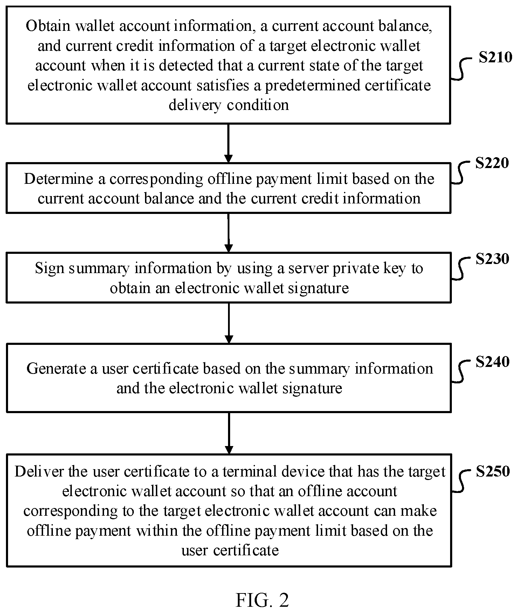

FIG. 2 shows a flowchart illustrating an offline payment authorization method, according to one or more embodiments of this specification. The method can be implemented by a server. The server can be implemented by any apparatus, device, platform, device cluster, or the like having a computing and processing capability. The method includes the following steps S210 to S250.

S210: Obtain wallet account information, a current account balance, and current credit information of a target electronic wallet account when it is detected that a current state of the target electronic wallet account satisfies a predetermined certificate delivery condition. The target electronic wallet account can be an electronic wallet account whose current state satisfies the predetermined certificate delivery condition. The electronic wallet account is an account of an electronic wallet application, and the electronic wallet application runs in a terminal device. The electronic wallet application includes but is not limited to applications that can support a payment function, such as the Alipay wallet application, a mobile phone wallet application, and a bank terminal application. The server is a server corresponding to the electronic wallet application.

In an implementation, to prevent privacy information of the target electronic wallet account from being disclosed, the wallet account information can be a hash value of a wallet account ID and wallet account name information that are corresponding to the target electronic wallet account. For example, the wallet account information can be an MD5 value of the wallet account ID and the wallet account name information. The current credit information can represent credit information corresponding to the target electronic wallet account, and the current credit information can include at least one piece of the following information: a current credit value and a current available credit limit.

In an example, the electronic wallet application is the Alipay wallet application, and the target electronic wallet account is an Alipay wallet account. Correspondingly, the wallet account information can be a hash value of the Alipay wallet account ID and Alipay wallet account name information. The current account balance can be a current user balance of the Alipay wallet. The current credit value can be the current Zhima Credit score. The current available credit limit can be the current Huabei (ANT credit pay) limit.

In an implementation, the predetermined certificate delivery condition includes at least one of the following conditions: 1. An obtained user certificate of the target electronic wallet account expires, and the terminal device is connected to the internet. 2. It is the first time period before the obtained user certificate expires, and the terminal device is connected to the internet. 3. It is the second time period before the obtained user certificate expires, and a mobile data usage state of the terminal device satisfies a predetermined idle condition. 4. A change of the current account balance and/or the current credit information of the target electronic wallet account satisfies a specific condition. 5. The target electronic wallet account has not obtained a user certificate, and the mobile data usage state of the terminal device satisfies a predetermined idle condition. The second time period is greater than the first time period.

It can be understood that the above-mentioned predetermined certificate delivery conditions are merely examples provided in the embodiments of this specification, and staff members can set a specific predetermined certificate delivery condition based on an actual situation requirement. Implementations are not limited in the embodiments of this specification. For example, the predetermined certificate delivery condition can further include the following: the target electronic wallet account has not obtained a user certificate, the current account balance and/or current credit information of the target electronic wallet account satisfy/satisfies a predetermined condition (for example, the current credit value in the current credit information exceeds a specific credit value, or the current available credit limit in the current credit information exceeds a certain limit, or the current account balance is not zero), and the terminal device is connected to the internet.

When it is detected that the current state of the target electronic wallet account satisfies any one of the predetermined certificate delivery conditions, it can be considered that the current state of the target electronic wallet account satisfies the predetermined certificate delivery condition, and the server obtains the wallet account information, the current account balance, and the current credit information of the target electronic wallet account.

S220: Determine a corresponding offline payment limit based on the current account balance and the current credit information. In this step, the current account balance can represent, to a certain extent, a purchase capability of the target electronic wallet account (a larger current account balance indicates a larger purchase capability), and the current credit information can represent a compliance degree of the target electronic wallet account (a larger current credit value in the current credit information and a larger current available credit limit indicate a higher compliance degree), for example, the level of trustworthiness in repayment. In view of this, the offline payment limit corresponding to the target electronic wallet account is determined based on the current account balance and the current credit information. The offline payment limit refers to the maximum amount that can be paid offline using the corresponding offline account of the target electronic wallet on the terminal device before each online repayment.

S230: Sign summary information by using a server private key to obtain an electronic wallet signature. The summary information includes the wallet account information, the offline payment limit, an issuance time, and validity duration. It should be understood that a change in credit information and account balance of the target electronic wallet account can cause a change in a purchase capability and a compliance degree of the target electronic wallet account (for example, the purchase capability is reduced or increased), and the offline payment limit determined for the target electronic wallet account changes accordingly. Therefore, a validity period can be set for the offline payment limit (that is, the user certificate is subsequently generated). Specifically, the validity period of the offline payment limit can be limited by a corresponding issuance time and validity period. In addition, to prevent the summary information from being tampered with and avoid a problem in a subsequent offline payment process, in this step, the server private key is used to sign the summary information to obtain the electronic wallet signature. The electronic wallet signature is used for identity verification and corresponding validity period verification when the offline account corresponding to the target electronic wallet account makes offline payment.

The issuance time represents a generation and delivery time of the user certificate. In a case, the user certificate is generated and delivered on the same day. The above-mentioned validity duration can be set based on experience, and the validity duration can be set to 3 to 7 days considering a change and a delivery frequency of information related to the target electronic wallet account.

S240: Generate a user certificate based on the summary information and the electronic wallet signature. In an implementation, the summary information and the electronic wallet signature can be combined to generate the user certificate.

S250: Deliver the user certificate to a terminal device that has the target electronic wallet account so that an offline account corresponding to the target electronic wallet account can make offline payment within the offline payment limit based on the user certificate. When the terminal device is connected to the internet, the server delivers the user certificate to the terminal device that has the target electronic wallet account, and the terminal device obtains and stores the user certificate by using the connected network. Subsequently, the offline account corresponding to the target electronic wallet account can make offline payment based on the user certificate. Before the terminal device is connected to the internet and performs offline payment settlement, a maximum amount limit for offline payment performed by the offline account is the offline payment limit. A specific maximum amount limit for offline payment can be determined based on the offline payment limit and a historical offline transaction amount. The offline payment settlement can refer to settlement performed, after the terminal device is connected to the internet again, by the server for the offline transaction amount generated by the offline account during the offline period of the terminal device.

In an implementation, a hardware wallet application is installed on the terminal device to implement offline payment. The offline account corresponding to the target electronic wallet account is an account corresponding to the hardware wallet application. In a case, the hardware wallet application can exist in a form of a plug-in of the electronic wallet application, or can exist in a form of an independent client application. If the hardware wallet application exists in a form of an independent client application, the electronic wallet application can be bound to the hardware wallet application so that the hardware wallet application can perform offline payment based on the user certificate.

In the embodiments of this specification, the user certificate is delivered to the terminal device that has the target electronic wallet account so that the offline account corresponding to the target electronic wallet account can make offline payment within the offline payment limit based on the user certificate. As such, offline payment within the offline payment limit can be implemented without the need to recharge the offline account in advance, that is, without the need to load working fund in advance. In addition, when the user certificate is delivered for the first time for the target electronic wallet account, there is no need to open the offline account corresponding to the target electronic wallet account (that is, no need to activate a corresponding hardware wallet), and there's no need to open and recharge the offline account in advance so that offline payment authorization is implemented.

In addition, in the embodiments of this specification, authorization of offline payment for the offline account that does not require recharging in advance is granted, that is, money is not stored in the offline account in advance, and mobile property of the user is not occupied in advance. It can be understood that in the embodiments, the offline account can be used to implement consumption before repayment based on the user certificate so as to avoid a problem that money stored in the offline account cannot be retrieved when the corresponding hardware wallet is damaged or the terminal device is lost, and avoid a property loss of the user.

In an implementation, to protect security of the user certificate and avoid leakage of the user certificate, the terminal device is provided with a trusted execution environment TEE. Correspondingly, S250 can include the following: delivering the user certificate to the TEE of the terminal device so that the terminal device stores the user certificate in the TEE. In a case, the hardware wallet application can be installed in the TEE of the terminal device.

In an implementation, S220 can include the following steps 11 and 12.

Step 11: Determine a current score of the target electronic wallet account based on the current account balance, the current credit information, and weights of the current account balance and the current credit information.

Step 12: Determine the offline payment limit corresponding to the target electronic wallet account based on the current score.

In this implementation, the server can pre-store the weight corresponding to each of the current account balance and the current credit information, and then determines the current score of the target electronic wallet account based on the current account balance, the weight corresponding to the current account balance, the current credit information, and the weight corresponding to the current credit information. In a case, the current score can be determined by adding up a product of the current account balance and its corresponding weight and a product of the current credit information and its corresponding weight. Alternatively, a product of the current account balance and its corresponding weight is first obtained through calculation as a first product value, a product of the current credit information and its corresponding weight is obtained through calculation as a second product value, and an average value of the first product value and the second product value is used as the current score. Subsequently, the offline payment limit corresponding to the target electronic wallet account is determined based on the current score. In a case, the server pre-stores a mapping relationship between a score and a limit. Based on the mapping relationship, a limit corresponding to the current score is determined as the offline payment limit.

For the current account balance of the target electronic wallet account, the account balance changes frequently when the owner of the target electronic wallet account keeps making purchases. If the account balance changes, and correspondingly, the offline payment limit changes, the server frequently generates and delivers a user certificate for the target electronic wallet account. As a result, server computing resources are wasted, network process consumption of the terminal device is increased, and user experience is poor. In view of this, in an implementation, step 12 can include the following steps 121 and 122.

Step 121: Determine a current limit level corresponding to the current score based on a predetermined first mapping relationship between an account score and a limit level.

Step 122: Determine a limit value corresponding to the current limit level as the offline payment limit based on a predetermined second mapping relationship between a limit level and a limit value.

In this implementation, limit levels are divided, and a mapping relationship between an account score and a limit level, that is, the first mapping relationship, and a mapping relationship between a limit level and a limit value, that is, the second mapping relationship, are built in advance and stored. Subsequently, after obtaining the current score, the server determines the current limit level corresponding to the current score based on the first mapping relationship, and determines the limit value corresponding to the current limit level as the offline payment limit based on the second mapping relationship. The limit levels are set so that only when the current account balance and/or the current credit information change/changes, which results in a change of the limit level corresponding to the calculated current score, the offline payment limit is changed (the user certificate is changed). As such, the case in which the server frequently generates and delivers a user certificate for the target electronic wallet account can be avoided.

In another implementation, a mapping relationship between an account balance and a limit and a mapping relationship between credit information and a limit can be directly established. Then, a limit corresponding to the current account balance and the current credit information is determined as the offline payment limit corresponding to the target electronic wallet account based on the mapping relationships.

In an implementation, the method can further include the following steps 21 to 23.

Step 21: Obtain an offline bill sent by the terminal device, where the offline bill is a bill generated by the offline account after offline payment, and includes at least a corresponding transaction amount and the wallet account information.

Step 22: Deduct a corresponding amount from the target electronic wallet account based on the transaction amount and the wallet account information.

Step 23: Send limit recovery information to the terminal device so that a current upper limit for offline payment of the offline account is restored to the offline payment limit.

In this implementation, after the server delivers the user certificate to the terminal device that has the target electronic wallet account, the offline account corresponding to the target electronic wallet account can make offline payment within the offline payment limit based on the user certificate. After the offline account makes offline payment, the corresponding offline bill is generated. The offline bill includes at least the transaction amount and the wallet account information that are corresponding to the offline payment performed on the offline account so that after the terminal device is connected to the internet, offline payment settlement is performed on the server side. Specifically, after being connected to the internet, the terminal device uploads the offline bill stored in the offline period to the server through a network. The server receives the offline bill, deducts the corresponding amount from the target electronic wallet account based on the transaction amount and the wallet account information included in the offline bill to implement offline payment settlement.

It can be understood that, to avoid double spending for the offline account, after performing one offline payment in the offline account, the terminal device adjusts the current upper limit for offline payment of the terminal device based on a corresponding transaction amount of the offline payment of the terminal device. For example, after the terminal device obtains the user certificate, an initial upper limit for offline payment of the offline account corresponding to the target electronic wallet account is the offline payment limit, that is, 300, corresponding to the user certificate. The offline account makes an offline payment, and a corresponding transaction amount is 50. Correspondingly, the terminal device adjusts, based on the transaction amount 50, the current upper limit for offline payment of the offline account to 250, that is, (300-50). The offline account makes another offline payment, and a corresponding transaction amount is 100. Correspondingly, the terminal device adjusts, based on the transaction amount 100, the current upper limit for offline payment of the offline account to 150, that is, (250-100); and so on.

In view of this, to ensure normal use of the offline payment function of the offline account, the server sends the limit recovery information to the terminal device after settlement. After obtaining the limit recovery information, the terminal device restores the upper limit for offline payment of the offline account, that is, restores the current upper limit for offline payment of the offline account to the offline payment limit.

In a case, the user certificate of the offline account corresponding to the target electronic wallet account may expire during an offline period of the terminal device. In this case, after the server performs offline payment settlement for the offline account, that is, after step 22 is completed, a new user certificate can be directly generated for the target electronic wallet account, and step 23 is not performed. That is, after performing settlement for the offline account, the server can first determine whether the user certificate currently obtained by the offline account expires, and if it is determined that the user certificate currently obtained by the offline account does not expire, step 23 is performed.

In an implementation, to prevent the offline bill from being tampered with or forged, the offline bill can further include corresponding merchant account information and a merchant signature, and the merchant signature is obtained by signing the merchant account information and the transaction amount by using a merchant private key. The corresponding merchant account information is account information of the merchant corresponding to the offline payment of the offline account.

Step 22 can include the following steps 221 and 222.

Step 221: Verify the offline bill by using a merchant public key corresponding to the merchant private key.

Step 222: If the verification succeeds, deduct the corresponding amount from the target electronic wallet account based on the transaction amount and the wallet account information.

In this implementation, the server can verify the offline bill by using the merchant public key corresponding to the merchant private key to determine whether the offline bill is tampered with. When the verification succeeds, that is, it is determined that the offline bill is not tampered with, the corresponding amount is deducted from the target electronic wallet account based on the transaction amount and the wallet account information. If the verification fails, it can be determined that the offline bill is tampered with. The server locks the offline bill and performs subsequent specific processing operations. The specific processing operations can be, for example, that the server checks the offline bill by querying a transaction record corresponding to the merchant.

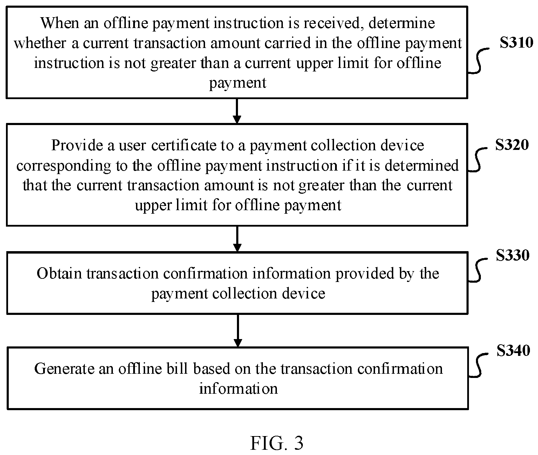

Corresponding to the above-mentioned method embodiments, embodiments of this specification further provide an offline payment method, which is applied to a terminal device. The terminal device stores a user certificate delivered by a server. The user certificate includes at least an offline payment limit, an issuance time, validity duration, and an electronic wallet signature. As shown in FIG. 3, the method can include steps S310 to S340.

S310: When an offline payment instruction is received, determine whether a current transaction amount carried in the offline payment instruction is not greater than a current upper limit for offline payment. The current upper limit for offline payment is determined based on the offline payment limit and a historical offline transaction amount. In a case, the current upper limit for offline payment can be the difference between the offline payment limit and a sum of all historical offline transaction amounts. The history offline transaction amount includes a transaction amount corresponding to historical offline payment performed by the terminal device after the terminal device restores or determines the offline payment limit last time and before the current offline payment.

In an example offline payment transaction, the terminal device can receive an offline payment instruction by scanning a collection code displayed by a merchant. The collection code includes the current transaction amount. In another example offline payment transaction, the terminal device can receive an offline payment instruction based on a user operation. For example, the user operation can be inputting a current transaction amount on a specified payment interface so that the terminal device receives the offline payment instruction. In another example offline payment transaction, the terminal device can display a payment code based on a user operation so that the payment collection device can scan the payment code. After scanning the payment code displayed by the terminal device, the payment collection device can provide a current transaction amount to the terminal device. Correspondingly, if the terminal device obtains the current transaction amount, it is considered that the terminal device obtains the offline payment instruction.

In an implementation, a hardware wallet application can be installed on the terminal device, and the terminal device implements the offline payment function by using the hardware wallet application. In another implementation, an electronic wallet application is further installed on the terminal device. The hardware wallet application can exist in a form of a plug-in of the electronic wallet application, or can exist in a form of an independent client application. If the hardware wallet application exists in a form of an independent client application, the electronic wallet application can be bound to the hardware wallet application so that the hardware wallet application can perform offline payment based on the user certificate.

The server is a server corresponding to the electronic wallet application, and the terminal device can obtain the user certificate by using the electronic wallet application. The offline payment limit is determined based on the account balance and credit information of the electronic wallet account logged in to the electronic wallet application. The user certificate can further include wallet account information of the electronic wallet account. The wallet account information can prove the account corresponding to the user certificate. The above-mentioned electronic wallet signature is obtained by signing the wallet account information, the offline payment limit, the issuance time, and the validity duration based on a private key of the server. The issuance time can include a generation and delivery time of the user certificate, and the validity period can limit the validity period of the user certificate.

S320: Provide the user certificate to a payment collection device corresponding to the offline payment instruction if it is determined that the current transaction amount is not greater than the current upper limit for offline payment. In this step, if the terminal device determines that the current transaction amount is not greater than the current upper limit for offline payment, it is considered that the transaction can be performed. Correspondingly, the user certificate is provided to the payment collection device corresponding to the offline payment instruction. In an implementation, the terminal device can provide the user certificate to the payment collection device corresponding to the offline payment instruction in a short-range transmission method. The short-range transmission method can include but is not limited to a Bluetooth transmission method, a code scanning transmission method, and a transmission method based on the Near Field Communication (NFC) technology.

S330: Obtain transaction confirmation information provided by the payment collection device. The transaction confirmation information is sent when the payment collection device determines that the user certificate is valid based on the electronic wallet signature.

S340: Generate an offline bill based on the transaction confirmation information.

After the terminal device provides the user certificate to the payment collection device, the payment collection device verifies the user certificate based on the electronic wallet signature. After the user certificate is authenticated, it is determined that the user certificate is valid, and the transaction is performed. After performing the transaction, the payment collection device generates the transaction confirmation information and provides the transaction confirmation information to the terminal device so as to notify the terminal device that the current transaction (offline payment) succeeds. The terminal device obtains the transaction confirmation information provided by the payment collection device, and generates the offline bill based on the transaction confirmation information. The server can perform offline payment settlement for the offline account through the offline bill.

In a case, the payment collection device can provide the transaction confirmation information to the terminal device in the above-mentioned short-range transmission method.

In this embodiment, when the terminal device determines that the current upper limit for offline payment is greater than the current transaction amount, that is, when the current transaction amount can be paid, the terminal device can provide the user certificate to the payment collection device, that is, implement offline payment by using the user certificate.

In an implementation, to avoid theft or tampering of the user certificate, the terminal device can include a trusted execution environment TEE, the user certificate can be stored in the TEE, and the offline payment method is executed in the TEE. Correspondingly, to avoid malicious destruction of the hardware wallet application, the hardware wallet application can be installed and run in the TEE. Considering the limitation of space resources of the TEE, the electronic wallet application can run in a rich execution environment REE of the terminal device.

In an implementation, the method can further include the following steps 31 and 32.

Step 31: Determine whether the user certificate is valid based on a receiving time of the offline payment instruction, and the issuance time and the validity duration of the user certificate.

When it is determined that the user certificate is valid, the user certificate is provided to the payment collection device corresponding to the offline payment instruction.

In an implementation, step 31 can be performed when the terminal device determines that the current transaction amount is not greater than the current upper limit for offline payment. Based on the receiving time of the offline payment instruction, and the issuance time and the validity duration of the user certificate, it is determined whether the user certificate is valid, that is, whether the issuance time plus the validity duration is not earlier than the receiving time. When it is determined that the issuance time plus the validity duration is not earlier than the receiving time, it is determined that the user certificate is valid, and the user certificate is provided to the payment collection device corresponding to the offline payment instruction in a short-range transmission method. In this implementation, invalid interaction between the terminal device and the payment collection device can be avoided. For example, when it is determined that the user certificate is invalid, the terminal device does not provide the user certificate to the payment collection device, but directly obtains a result that offline payment cannot be performed.

In another implementation, after receiving the offline payment instruction, the terminal device can first determine whether the user certificate is valid based on the receiving time of the offline payment instruction, and the issuance time and the validity duration of the user certificate. When determining that the user certificate is valid, the terminal device determines whether the current transaction amount carried in the offline payment instruction is not greater than the current upper limit for offline payment. Further, if it is determined that the current transaction amount is not greater than the current upper limit for offline payment, the terminal device provides the user certificate to the payment collection device corresponding to the offline payment instruction. If it is determined that the user certificate is invalid, no further step is performed.

To avoid double spending for the offline account, the terminal device needs to update the current upper limit for offline payment of the terminal device when obtaining the transaction confirmation information provided by the payment collection device, that is, when determining that the current offline payment succeeds. Correspondingly, in an implementation, the method can further include the following steps 41 and 42.

Step 41: Calculate a difference between the current upper limit for offline payment and the current transaction amount.

Step 42: Determine the difference as a new current upper limit for offline payment.

In embodiments of this specification, the offline bill generated by the terminal device by performing offline payment based on the user certificate during the offline period is stored locally in the terminal device. To avoid tampering with the offline bill, the offline bill can be stored in the TEE. Subsequently, to ensure normal use of the offline account, when the terminal device is connected to the internet again, the offline bill is uploaded to the server, and the server performs settlement for the offline account based on the offline bill.

In an implementation, when detecting that the terminal device is connected to the internet, the terminal device can automatically search for all offline bills that are locally stored and have not been uploaded to the server, and automatically send all the offline bills to the server. In another implementation, when detecting that the terminal device is connected to the internet, the terminal device automatically searches for all offline bills that are locally stored and have not been uploaded to the server, displays offline bill prompt information to prompt the user to upload the offline bill, and then sends the offline bills to the server when an offline bill upload instruction of the user is received.

Correspondingly, the method can further include the following steps: sending the offline bill to the server when the terminal device is connected to the internet so that the server performs settlement based on the offline bill. Subsequently, after performing settlement, the server can continue to determine whether the user certificate obtained by the offline account is valid, and send the limit recovery information to the terminal device when it is determined that the user certificate is valid. After obtaining the limit recovery information, the terminal device restores the current upper limit for offline payment to the offline payment limit carried in the user certificate.

To avoid falsification or tampering of the transaction confirmation information, the terminal device can first verify the transaction confirmation information after obtaining the transaction confirmation information. Correspondingly, in an implementation, the transaction confirmation information includes merchant account information, the current transaction amount, and a merchant signature, and the merchant signature is obtained by signing the merchant account information and the current transaction amount by using a merchant private key.

The step S340 can include the following steps 51 and 52.

Step 51: Verify the transaction confirmation information based on a merchant public key corresponding to the merchant private key.

Step 52: Generate the offline bill based on the merchant account information, the current transaction amount, and the wallet account information if the verification succeeds.

The merchant public key corresponding to the merchant private key can be locally stored in the terminal device, or can be provided by the payment collection device to the terminal device when the terminal device performs the transaction with the merchant. After obtaining the transaction confirmation information, the terminal device verifies the transaction confirmation information based on the merchant public key corresponding to the merchant private key. If the verification succeeds, that is, it is determined that neither the merchant account information nor the current transaction amount in the transaction confirmation information is tampered with, the terminal device generates the offline bill based on the merchant account information, the current transaction amount, and the wallet account information. The offline bill can include at least the merchant account information, the current transaction amount, and the wallet account information.

In another implementation, the offline bill can further include the merchant signature so that before performing settlement for the offline account, the server first verifies, by using the merchant public key corresponding to the merchant private key, the offline bill to determine whether the merchant account information and the transaction amount that are carried in the offline bill are tampered with. After determining that the merchant account information and the transaction amount that are carried in the offline bill are not tampered with, that is, the verification on the offline bill succeeds, the server performs settlement for the offline account, that is, deducts a corresponding amount from the corresponding wallet account based on the transaction amount and the wallet account information carried in the offline bill, so as to avoid property loss of the electronic wallet account.

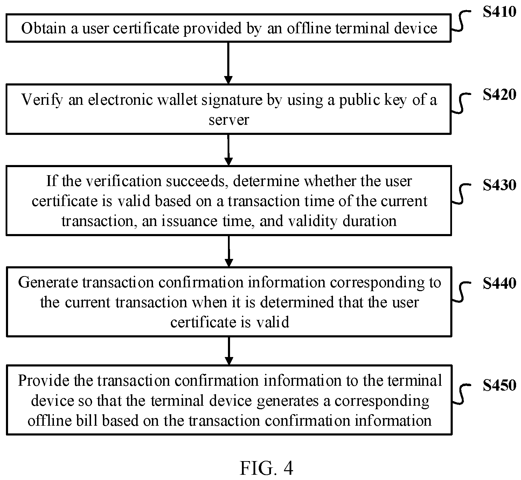

Corresponding to the above-mentioned method embodiments, embodiments of this specification further provide a payment collection method for an offline device. The method is applied to a payment collection device. As shown in FIG. 4, the method includes the following steps S410 to S450.

S410: Obtain a user certificate provided by an offline terminal device. The user certificate is delivered by a server and includes wallet account information of an electronic wallet account corresponding to the terminal device, an offline payment limit, an issuance time and validity duration of the user certificate, and an electronic wallet signature.

The user certificate is a user certificate generated according to the offline payment authorization method provided in the above-mentioned embodiments. For a specific generation process, refer to the above-mentioned offline payment authorization method embodiments. Details are not described herein again. The user certificate is generated by the server and delivered to the terminal device in the connected state. The terminal device stores the user certificate locally, for example, stores the user certificate in a trusted execution environment TEE of the terminal device. Subsequently, the terminal device in an offline state can perform offline payment based on the user certificate, that is, perform offline transaction with the merchant.

In a case, when the terminal device in the offline state trades (performs offline payment) with a merchant, the user certificate can be provided to a payment collection device of the merchant in a short-range transmission method, and the payment collection device obtains, in a short-range transmission method, the user certificate provided by the offline terminal device. The short-range transmission method can include but is not limited to a Bluetooth communication method, a code scanning communication method, and a transmission method based on the Near Field Communication (NFC) technology.

S420: Verify the electronic wallet signature by using a public key of the server. The electronic wallet signature is generated by signing the wallet account information of the electronic wallet account corresponding to the terminal device, the offline payment limit, and the issuance time and validity duration of the user certificate by using the private key of the server (that is, the server private key mentioned in the above-mentioned embodiment). The public key of the server can be locally stored in advance in the payment collection device, or can be downloaded from the server after the payment collection device obtains the user certificate.

The payment collection device verifies the electronic wallet signature by using the public key of the server so as to determine whether the wallet account information, the offline payment limit, the issuance time and validity duration of the user certificate that are in the user certificate are tampered with. Subsequent step S430 is performed correspondingly when it is determined that the wallet account information, the offline payment limit, the issuance time and validity duration of the user certificate are not tampered with, that is, it is determined that the verification on the electronic wallet signature succeeds. If it is determined that any information of the wallet account information, the offline payment limit, or the issuance time or validity duration of the user certificate is tampered with, it is determined that the verification on the electronic wallet signature fails and the transaction cannot be performed.

In an implementation, after determining that the verification on the electronic wallet signature fails, the payment collection device can provide the terminal device with information that represents a transaction failure. Alternatively, after determining that the verification on the electronic wallet signature fails, the payment collection device can display, on a display screen connected to the payment collection device, information indicating that the user certificate is incorrect. The user of the payment collection device can determine, based on the information, that the transaction payment fails, and then perform a corresponding operation. For example, the user of the terminal device is reminded that payment cannot be performed, and another payment method is recommended.

S430: If the verification succeeds, determine whether the user certificate is valid based on a transaction time of the current transaction, the issuance time, and the validity duration. In this step, after it is determined that the verification on the electronic wallet signature succeeds, the collection device obtains the transaction time of the current transaction, and determines whether the user certificate is valid based on the transaction time, the issuance time, and the validity duration.

A process of determining whether the user certificate is valid can be as follows: determining a first time based on the issuance time and the validity duration, and determining whether the transaction time is not later than the first time. Subsequently, when it is determined that the transaction time is not later than the first time, it is determined that the user certificate is valid; on the contrary, when it is determined that the transaction time is later than the first time, it is determined that the user certificate is invalid.

S440: Generate transaction confirmation information corresponding to the current transaction when it is determined that user certificate is valid. In this step, when determining that the user certificate is valid, the payment collection device performs the transaction and generates the transaction confirmation information corresponding to the current transaction. The transaction confirmation information is used to represent that the current transaction succeeds. In a case, the transaction confirmation information can include at least merchant account information of the merchant, a transaction amount of the current transaction, and a merchant signature. The merchant signature is obtained by signing at least the merchant account information and the current transaction amount by using a merchant private key. Subsequently, the terminal device side and/or the server side can verify, by using a merchant signature, the merchant account information and whether the current transaction amount is tampered with.

In another implementation, when it is determined that the user certificate is invalid, the payment collection device can generate transaction failure information, and provide the transaction failure information to the terminal device. Alternatively, after determining that the user certificate is invalid, the payment collection device can display, on a display screen connected to the payment collection device, information indicating that the user certificate is invalid. The user of the payment collection device can determine, based on the information, that the transaction payment fails, and then perform a corresponding operation. For example, the user of the terminal device is reminded that payment cannot be performed, and another payment method is recommended.

S450: Provide the transaction confirmation information to the terminal device so that the terminal device generates a corresponding offline bill based on the transaction confirmation information. In an implementation, after generating the transaction confirmation information, the payment collection device can provide the transaction confirmation information to the terminal device in a short-range transmission method. After obtaining the transaction confirmation information, the terminal device generates the corresponding offline bill based on the transaction confirmation information.

In this embodiment, the payment collection device performs the transaction when verifying that the user certificate provided by the terminal device is valid, thereby facilitating a transaction of the terminal device in an offline state.

Some specific embodiments of this specification are described in the above content, and some other embodiments fall within the scope of the appended claims. In some cases, actions or steps described in the claims can be performed in a sequence different from that in the embodiments and desired results can still be achieved. In addition, processes described in the accompanying drawings do not necessarily need a specific order or a sequential order shown to achieve the desired results. In some implementations, multitasking and parallel processing are also possible or may be advantageous.

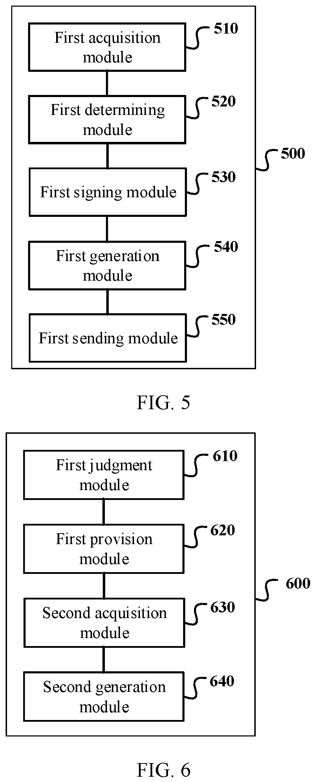

Corresponding to the above-mentioned method embodiments, embodiments of this specification provide an offline payment authorization apparatus 500, applied to a server. A schematic block diagram of the apparatus is shown in FIG. 5, and the apparatus includes the following: a first acquisition module 510, configured to obtain wallet account information, a current account balance, and current credit information of a target electronic wallet account when it is detected that a current state of the target electronic wallet account satisfies a predetermined certificate delivery condition; a first determining module 520, configured to determine a corresponding offline payment limit based on the current account balance and the current credit information; a first signing module 530, configured to sign summary information by using a server private key to obtain an electronic wallet signature, where the summary information includes the wallet account information, the offline payment limit, an issuance time, and validity duration; a first generation module 540, configured to generate a user certificate based on the summary information and the electronic wallet signature; and a first sending module 550, configured to deliver the user certificate to a terminal device that has the target electronic wallet account so that an offline account corresponding to the target electronic wallet account can make offline payment within the offline payment limit based on the user certificate.

In an implementation, the predetermined certificate delivery condition includes at least one of the following conditions: an obtained user certificate of the target electronic wallet account expires, and the terminal device is connected to the internet; it is the first time period before the obtained user certificate expires, and the terminal device is connected to the internet; it is the second time period before the obtained user certificate expires, and a mobile data usage state of the terminal device satisfies a predetermined idle condition; a change of the current account balance and/or the current credit information of the target electronic wallet account satisfies a specific condition; and the target electronic wallet account has not obtained a user certificate, and the mobile data usage state of the terminal device satisfies a predetermined idle condition.

In an implementation, the wallet account information is a hash value of a wallet account ID and wallet account name information that are corresponding to the target electronic wallet account.

In an implementation, the current credit information includes at least one piece of the following information: a current credit value and a current available credit limit.

In an implementation, the terminal device is provided with a trusted execution environment TEE.

The first sending module 550 is specifically configured to deliver the user certificate to the TEE of the terminal device so that the terminal device stores the user certificate in the TEE.

In an implementation, the first determining module 520 includes the following: a first determining unit (not shown in the figure), configured to determine a current score of the target electronic wallet account based on the current account balance, the current credit information, and weights of the current account balance and the current credit information; and a second determining unit (not shown in the figure), configured to determine the offline payment limit corresponding to the target electronic wallet account based on the current score.

In an implementation, the second determining unit is specifically configured to determine a current limit level corresponding to the current score based on a predetermined first mapping relationship between an account score and a limit level; and determine a limit value corresponding to the current limit level as the offline payment limit based on a predetermined second mapping relationship between a limit level and a limit value. In an implementation, the apparatus further includes the following: a fourth acquisition module (not shown in the figure), configured to obtain an offline bill sent by the terminal device, where the offline bill is a bill generated by the offline account after offline payment, and includes at least a corresponding transaction amount and the wallet account information; an amount deduction module (not shown in the figure), configured to deduct a corresponding amount from the target electronic wallet account based on the transaction amount and the wallet account information; and a second sending module (not shown in the figure), configured to send limit recovery information to the terminal device so that a current upper limit for offline payment of the offline account is restored to the offline payment limit.

In an implementation, the offline bill further includes corresponding merchant account information and a merchant signature, and the merchant signature is obtained by signing the merchant account information and the transaction amount by using a merchant private key.

The amount deduction module is specifically configured to verify the offline bill by using a merchant public key corresponding to the merchant private key; and deduct a corresponding amount from the target electronic wallet account based on the transaction amount and the wallet account information if the verification succeeds.

Corresponding to the above-mentioned method embodiments, embodiments of this specification provide an offline payment apparatus 600, applied to a terminal device. The terminal device stores a user certificate delivered by a server, and the user certificate includes at least an offline payment limit, an issuance time, validity duration, and an electronic wallet signature. A schematic block diagram of the apparatus is shown in FIG. 6, and the apparatus includes the following: a first judgment module 610, configured to: when an offline payment instruction is received, determine whether a current transaction amount carried in the offline payment instruction is not greater than a current upper limit for offline payment, where the current upper limit for offline payment is determined based on the offline payment limit and a historical offline transaction amount; a first provision module 620, configured to provide the user certificate to a payment collection device corresponding to the offline payment instruction if it is determined that the current transaction amount is not greater than the current upper limit for offline payment; a second acquisition module 630, configured to obtain transaction confirmation information provided by the payment collection device, where the transaction confirmation information is sent when the payment collection device determines, based on the electronic wallet signature, that the user certificate is valid; and a second generation module 640, configured to generate an offline bill based on the transaction confirmation information.

In an implementation, the terminal device includes a trusted execution environment TEE, the user certificate is stored in the TEE, and the method is executed in the TEE.

In an implementation, the apparatus further includes the following: a third judgment module (not shown in the figure), configured to determine whether the user certificate is valid based on a receiving time of the offline payment instruction and the issuance time and validity duration of the user certificate; and a third provision module (not shown in the figure), configured to provide the user certificate to the payment collection device if it is determined that the user certificate is valid.

In an implementation, the apparatus further includes the following: a calculation module (not shown in the figure), configured to calculate a difference between the current upper limit for offline payment and the current transaction amount; and a second determining module (not shown in the figure), configured to determine the difference as a new current upper limit for offline payment.

In an implementation, the apparatus further includes the following: a third sending module (not shown in the figure), configured to send the offline bill to the server when the terminal device is connected to the internet so that the server performs settlement based on the offline bill.

In an implementation, the second acquisition module 630 is specifically configured to obtain the transaction confirmation information provided by the payment collection device in a short-range transmission method.

In an implementation, the transaction confirmation information includes merchant account information of the merchant, the current transaction amount, and a merchant signature, and the merchant signature is obtained by signing the merchant account information and the current transaction amount by using a merchant private key.

The second generation module 640 is specifically configured to verify the transaction confirmation information based on a merchant public key corresponding to the merchant private key, and generate the offline bill based on the merchant account information, the current transaction amount, and the wallet account information if the verification succeeds.

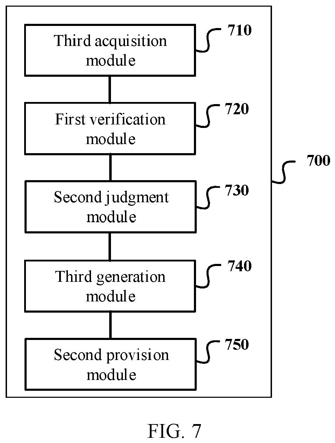

Corresponding to the above-mentioned method embodiments, embodiments of this specification provide a payment collection apparatus 700 for an offline device, applied to a payment collection device. A schematic block diagram of the apparatus is shown in FIG. 7, and the apparatus includes the following: a third acquisition module 710, configured to obtain a user certificate provided by an offline terminal device, where the user certificate is delivered by a server, and includes wallet account information of an electronic wallet account corresponding to the terminal device, an offline payment limit, an issuance time and validity duration of the user certificate, and an electronic wallet signature; a first verification module 720, configured to verify the electronic wallet signature by using a public key of the server; a second judgment module 730, configured to: if the verification succeeds, determine whether the user certificate is valid based on a transaction time of the current transaction, the issuance time, and the validity duration; a third generation module 740, configured to generate transaction confirmation information corresponding to the current transaction when it is determined that the user certificate is valid; and a second provision module 750, configured to provide the transaction confirmation information to the terminal device so that the terminal device generates a corresponding offline bill based on the transaction confirmation information

In an implementation, the transaction confirmation information includes at least merchant account information of the merchant, the current transaction amount, and a merchant signature, and the merchant signature is obtained by signing the merchant account information and the current transaction amount by using a merchant private key.

In an implementation, the second provision module 750 is specifically configured to provide the transaction confirmation information to the terminal device in a short-range transmission method.

In an implementation, the apparatus further includes the following: a fourth generation module (not shown in the figure), configured to generate transaction failure information when it is determined that the user certificate is invalid; and a fourth provision module (not shown in the figure), configured to provide the transaction failure information to the terminal device.

The above apparatus embodiments correspond to the method embodiments. For detailed description, references can be made to the description of the part of the method embodiments, and details are omitted for simplicity. The apparatus embodiments are obtained based on the corresponding method embodiments, and have the same technical effects as the corresponding method embodiments. For detailed description, references can be made to the corresponding method embodiments.

Embodiments of this specification further provide a computer-readable storage medium, which stores a computer program. When the computer program is executed in a computer, the computer is enabled to perform the offline payment authorization method provided in this specification.

Embodiments of this specification further provide a computing device, including a memory and a processor. The memory stores executable code, and the processor executes the executable code to implement the offline payment authorization method provided in this specification.

Embodiments of this specification further provide a computer-readable storage medium, which stores a computer program. When the computer program is executed in a computer, the computer is enabled to perform the offline payment method provided in this specification.

Embodiments of this specification further provide a computing device, including a memory and a processor. The memory stores executable code, and the processor executes the executable code to implement the offline payment method provided in this specification.

Embodiments of this specification further provide a computer-readable storage medium, which stores a computer program. When the computer program is executed in a computer, the computer is enabled to perform the payment collection method for an offline device provided in this specification.

Embodiments of this specification further provide a computing device, including a memory and a processor. The memory stores executable code, and the processor executes the executable code to implement the payment collection method for an offline device provided in this specification.

The embodiments in this specification are described in a progressive way. For same or similar parts of the embodiments, references can be made to the embodiments mutually. Each embodiment focuses on a difference from other embodiments. Particularly, the storage medium embodiments and the computing device embodiments are basically similar to the method embodiments, and therefore are described briefly. For a related part, references can be made to the corresponding descriptions in the method embodiments.

A person skilled in the art should be aware that in the previous one or more examples, functions described in the embodiments of this specification can be implemented by hardware, software, firmware, or any combination thereof. When implemented by software, these functions can be stored in a computer-readable medium or transmitted as one or more instructions or code on a computer-readable medium.

The objectives, technical solutions, and beneficial effects of the embodiments of this application have been described in more detail with reference to the above-mentioned specific implementations. It should be understood that the above-mentioned descriptions are merely some specific implementations of the embodiments of this application and are not intended to limit the protection scope of this application. Any modification, equivalent replacement, improvement, etc. made based on the technical solutions of this application shall fall within the protection scope of this application.

## Claims

1. An offline payment authorization method, applied to a server, wherein the method comprises:
obtaining wallet account information, a current account balance, and current credit information of a target electronic wallet account when it is detected that a current state of the target electronic wallet account satisfies a predetermined certificate delivery condition;
determining a corresponding offline payment limit based on the current account balance and the current credit information;
signing summary information by using a server private key to obtain an electronic wallet signature, wherein the summary information comprises the wallet account information, the offline payment limit, an issuance time, and validity duration;
generating a user certificate based on the summary information and the electronic wallet signature; and
delivering the user certificate to a terminal device that has the target electronic wallet account so that an offline account corresponding to the target electronic wallet account can make offline payment within the offline payment limit based on the user certificate.

2. The method according to claim 1, wherein the predetermined certificate delivery condition comprises at least one of the following conditions: an obtained user certificate of the target electronic wallet account expires, and the terminal device is connected to the internet;
it is the first time period before the obtained user certificate expires, and the terminal device is connected to the internet;
it is the second time period before the obtained user certificate expires, and a mobile data usage state of the terminal device satisfies a predetermined idle condition;
a change of the current account balance and/or the current credit information of the target electronic wallet account satisfies a specific condition; and
the target electronic wallet account has not obtained a user certificate, and the mobile data usage state of the terminal device satisfies a predetermined idle condition.

3. The method according to claim 1, wherein the wallet account information is a hash value of a wallet account ID and wallet account name information that are corresponding to the target electronic wallet account.

4. The method according to claim 1, wherein the current credit information comprises at least one of the following information: a current credit value and a current available credit limit.

5. The method according to claim 1, wherein the terminal device is provided with a trusted execution environment TEE, and
the delivering the user certificate to a terminal device that has the target electronic wallet account comprises:
delivering the user certificate to the TEE of the terminal device so that the terminal device stores the user certificate in the TEE.

6. The method according to claim 1, wherein the determining a corresponding offline payment limit based on the current account balance and the current credit information comprises:
determining a current score of the target electronic wallet account based on the current account balance, the current credit information, and weights of the current account balance and the current credit information; and
determining the offline payment limit corresponding to the target electronic wallet account based on the current score.

7. The method according to claim 6, wherein the determining the offline payment limit corresponding to the target electronic wallet account based on the current score comprises:
determining a current limit level corresponding to the current score based on a predetermined first mapping relationship between an account score and a limit level; and
determining a limit value corresponding to the current limit level as the offline payment limit based on a predetermined second mapping relationship between a limit level and a limit value.

8. The method according to any one of claims 1 to 7, further comprising:
obtaining an offline bill sent by the terminal device, wherein the offline bill is a bill generated by the offline account after offline payment, and comprises at least a corresponding transaction amount and the wallet account information;
deducting a corresponding amount from the target electronic wallet account based on the transaction amount and the wallet account information; and
sending limit recovery information to the terminal device so that a current upper limit for offline payment of the offline account is restored to the offline payment limit.

9. The method according to claim 8, wherein the offline bill further comprises corresponding merchant account information and a merchant signature, and the merchant signature is obtained by signing the merchant account information and the transaction amount by using a merchant private key; and
the deducting a corresponding amount from the target electronic wallet account based on the transaction amount and the wallet account information comprises:
verifying the offline bill by using a merchant public key corresponding to the merchant private key; and
deducting the corresponding amount from the target electronic wallet account based on the transaction amount and the wallet account information if the verification succeeds.

10. An offline payment method, applied to a terminal device, wherein the terminal device stores a user certificate delivered by a server, the user certificate comprises at least an offline payment limit, an issuance time, validity duration, and an electronic wallet signature, and the method comprises:
when an offline payment instruction is received, determining whether a current transaction amount carried in the offline payment instruction is not greater than a current upper limit for offline payment, wherein the current upper limit for offline payment is determined based on the offline payment limit and a historical offline transaction amount;
providing the user certificate to a payment collection device corresponding to the offline payment instruction if it is determined that the current transaction amount is not greater than the current upper limit for offline payment;
obtaining transaction confirmation information provided by the payment collection device, wherein the transaction confirmation information is sent when the payment collection device determines, based on the electronic wallet signature, that the user certificate is valid; and
generating an offline bill based on the transaction confirmation information.

11. The method according to claim 10, wherein the terminal device comprises a trusted execution environment TEE, the user certificate is stored in the TEE, and the method is executed in the TEE.

12. The method according to claim 10, further comprising:
determining whether the user certificate is valid based on a receiving time of the offline payment instruction and the issuance time and validity duration of the user certificate; and
providing the user certificate to the payment collection device when it is determined that the user certificate is valid.

13. The method according to claim 10, further comprising:
calculating a difference between the current upper limit for offline payment and the current transaction amount; and
determining the difference as a new current upper limit for offline payment.

14. The method according to claim 10, further comprising:
sending the offline bill to the server when the terminal device is connected to the internet so that the server performs settlement based on the offline bill.

15. The method according to claim 10, wherein the obtaining transaction confirmation information provided by the payment collection device comprises:
obtaining, in a short-range transmission method, the transaction confirmation information provided by the payment collection device.

16. The method according to claim 10, wherein the transaction confirmation information comprises merchant account information of the merchant, the current transaction amount, and a merchant signature, and the merchant signature is obtained by signing the merchant account information and the current transaction amount by using a merchant private key; and
the generating an offline bill based on the transaction confirmation information comprises:
verifying the transaction confirmation information based on a merchant public key corresponding to the merchant private key; and
generating the offline bill based on the merchant account information, the current transaction amount, and the wallet account information if the verification succeeds.

17. A payment collection method for an offline device, applied to a payment collection device, wherein the method comprises:
obtaining a user certificate provided by an offline terminal device, wherein the user certificate is delivered by a server, and comprises wallet account information of an electronic wallet account corresponding to the terminal device, an offline payment limit, an issuance time and validity duration of the user certificate, and an electronic wallet signature;
verifying the electronic wallet signature by using a public key of the server;
if the verification succeeds, determining whether the user certificate is valid based on a transaction time of the current transaction, the issuance time, and the validity duration;
generating transaction confirmation information corresponding to the current transaction when it is determined that the user certificate is valid; and
providing the transaction confirmation information to the terminal device so that the terminal device generates a corresponding offline bill based on the transaction confirmation information.

18. The method according to claim 17, wherein the transaction confirmation information comprises at least merchant account information of the merchant, a current transaction amount, and a merchant signature, and the merchant signature is obtained by signing the merchant account information and the current transaction amount by using a merchant private key.

19. The method according to claim 17, wherein the providing the transaction confirmation information to the terminal device comprises:
providing the transaction confirmation information to the terminal device in a short-range transmission method.

20. The method according to claim 17, further comprising:
generating transaction failure information when it is determined that the user certificate is invalid; and
providing the transaction failure information to the terminal device.

21. An offline payment authorization apparatus, applied to a server, wherein the apparatus comprises:
a first acquisition module, configured to obtain wallet account information, a current account balance, and current credit information of a target electronic wallet account when it is detected that a current state of the target electronic wallet account satisfies a predetermined certificate delivery condition;
a first determining module, configured to determine a corresponding offline payment limit based on the current account balance and the current credit information;
a first signing module, configured to sign summary information by using a server private key to obtain an electronic wallet signature, wherein the summary information comprises the wallet account information, the offline payment limit, an issuance time, and validity duration;
a first generation module, configured to generate a user certificate based on the summary information and the electronic wallet signature; and
a first sending module, configured to deliver the user certificate to a terminal device that has the target electronic wallet account so that an offline account corresponding to the target electronic wallet account can make offline payment within the offline payment limit based on the user certificate.

22. An offline payment apparatus, applied to a terminal device, wherein the terminal device stores a user certificate delivered by a server, the user certificate comprises at least an offline payment limit, an issuance time, validity duration, and an electronic wallet signature, and the apparatus comprises:
a first judgment module, configured to: when an offline payment instruction is received, determine whether a current transaction amount carried in the offline payment instruction is not greater than a current upper limit for offline payment, wherein the current upper limit for offline payment is determined based on the offline payment limit and a historical offline transaction amount;
a first provision module, configured to provide the user certificate to a payment collection device corresponding to the offline payment instruction if it is determined that the current transaction amount is not greater than the current upper limit for offline payment;
a second acquisition module, configured to obtain transaction confirmation information provided by the payment collection device, wherein the transaction confirmation information is sent when the payment collection device determines, based on the electronic wallet signature, that the user certificate is valid; and
a second generation module, configured to generate an offline bill based on the transaction confirmation information.

23. A payment collection apparatus for an offline device, applied to a payment collection device, wherein the apparatus comprises:
a third acquisition module, configured to obtain a user certificate provided by an offline terminal device, wherein the user certificate is delivered by a server, and comprises wallet account information of an electronic wallet account corresponding to the terminal device, an offline payment limit, an issuance time and validity duration of the user certificate, and an electronic wallet signature;
a first verification module, configured to verify the electronic wallet signature by using a public key of the server;
a second judgment module, configured to: if the verification succeeds, determine whether the user certificate is valid based on a transaction time of the current transaction, the issuance time, and the validity duration;
a third generation module, configured to generate transaction confirmation information corresponding to the current transaction when it is determined that the user certificate is valid; and
a second provision module, configured to provide the transaction confirmation information to the terminal device so that the terminal device generates a corresponding offline bill based on the transaction confirmation information.

24. A computing device, comprising a storage and a processor, wherein the storage stores executable code, and when executing the executable code, the processor implements the method according to any one of claims 1 to 9, claims 10 to 16, or claims 17 to 20.
